# EUROPEAN PATENT APPLICATION

(11) **EP 4 498 551 A1**
(43) Date of publication of application: **29.01.2025**
(21) Application number: 24182299.8
(22) Date of filing: 14.06.2024
(51) Int. Cl.: H02J 1/08, H02J 1/10, H02J 7/34

(54) **MULTILANE POWER DISTRIBUTION SYSTEM**

(30) Priority: 25.07.2023 GB 202311374
(71) Applicant: Rolls-Royce Deutschland Ltd & Co KG, 15827 Blankenfelde-Mahlow (DE)
(72) Inventor: BIRÓ, Norbert, 15827 Blankenfelde-Mahlow (DE)

(57) **Abstract**

A multilane power distribution system which comprises a plurality of DC power sources (G1, G2, Y1, Y2, B1, B2, R1, R2) and a plurality of load devices (EPU 1-8), wherein each DC power source (G1, G2, Y1, Y2, B1, B2, R1, R2) powers at least two of the load devices (EPU 1-8), and each of the load devices (EPU 1-8) is powered by at least two of the DC power sources (G1, G2, Y1, Y2, B1, B2, R1, R2). The system further comprises a DC connection network, the DC connection network comprising power buses for connecting the DC power sources (G1, G2, Y1, Y2, B1, B2, R1, R2) and the load devices (EPU 1-8), the power buses having a high side voltage rail (PB-G1-H, PB-G2-H) for the positive voltage and a low side voltage rail (PB-G1-L, PB-G2-L) for the negative voltage. At least two of the power buses (G1, G2, Y1, Y2, B1, B2, R1, R2) are connectable by switchable elements (11-14, 14-H, 14-L), namely, a first switchable element (14-H) for the positive voltage rails (PB-G1-H, PB-G2-H) and a second switchable element (14-L) for the negative voltage rails (PB-G1-L, PB-G2-L), the switchable elements (14-H, 14-L) when switched on electrically connecting the terminals of two of the DC power sources (G1, G2) connected by the respective power buses (PB-G1, PB-G2). A bypass path (15) is provided that bypasses one of the switchable elements (14-H), the bypass path (15) comprising a bypass resistor (I, R) and a further switchable element (14-BP).

## Description

### Field of the disclosure

The present disclosure relates to a multilane power distribution system, in particular for aerospace DC power systems.

### Background

In aircraft DC power distribution systems it is known to implement multiple energy sources such as multiple batteries or fuel cells and multiple loads such as electric propulsion units (EPUs). The multiple loads and sources may be connected through a DC distribution system using a multilane architecture, meaning that the DC distribution system comprises a plurality of power buses.

The multilane architecture provides for the possibility that different lanes are connected to allow sharing of power from the batteries and/or to provide for redundancy. However, when batteries are connected, this may result in unwanted inrush current and/or a current flowing among batteries. In particular, an initial current transient of a different voltage bus can trigger a battery pack main protection, cause battery thermal runaway and/or melt battery cell connections.

There is a need to provide a method for controlling a multilane power distribution system that allows to connect batteries or other DC power sources of such power distribution system in an efficient manner that addresses the aforementioned problems or at least provides a useful alternative to known multilane power distribution systems.

### Summary of the disclosure

The present disclosure provides a multilane power distribution system as set out in the appended claims.

In a first aspect a multilane power distribution system is provided. The multilane power distribution system comprises a plurality of DC power sources and a plurality of load devices, wherein each DC power source powers at least two of the load devices, and wherein each of the load devices is powered by at least two of the DC power sources. The multilane power distribution system further comprises a DC connection network, the DC connection network comprising power buses for connecting the DC power sources and the load devices, the power buses having a high side voltage rail for the positive voltage and a low side voltage rail for the negative voltage. At least two of the power buses are connectable by switchable elements, namely, a first switchable element for the positive voltage rails and a second switchable element for the negative voltage rails, the switchable elements when switched on electrically connecting the terminals of two of the DC power sources connected by the respective power buses.

There is further provided a bypass path that bypasses one of the switchable elements, the bypass path comprising a bypass resistor and a further switchable element.

Aspects of the invention are thus based on the idea to provide for a bypass path which comprises a bypass resistor and a switchable element, wherein the bypass resistor limits any inrush current when the two DC power sources are connected. The bypass path thus provides for a high resistance path with a switchable element that allows to dampen the initial current and keep the initial current within safe limits of a DC power source protection such as a battery pack protection. The switchable element allows to switch the bypass path on and off.

A further advantage associated with the present system lies in that the bypass path allows the voltage levels of the two DC power sources and/or of capacitive loads connected to the DC power sources to slowly align with each other, wherein, after such alignment, the other switchable element can be switched on.

The bypass resistor may be or comprise an inductor having an inductive resistance. Alternatively or in addition, the bypass resistor may be or comprise an ohmic resistor.

In case of an inductor having an inductive resistance, the present system is based on the realization that, due to self-induction, a voltage is induced in each inductor, wherein the induced voltage, according to Lenz's law, counteracts the cause of its generation - i.e. the current flow through the coil. This results in a reduction of the current intensity. Thus, in addition to the ohmic resistance of its windings, every coil has an additional inductive resistance that is caused by its inductance. The inductive resistance of a coil is the greater, the higher the counter voltage induced in it is. This allows to avoid even very high inrush currents.

In case of an inductor having an ohmic resistance only, the present system can rely on a fixed resistance independent of current and voltage that behaves in accordance with Ohm's law. A relatively high ohmic resistance may be chosen to limit and dampen an initial inrush current.

In some embodiments the bypass path bypasses the first switchable element, namely, the switchable element of the high side voltage rail. The switchable element for the low side voltage rail, on the other hand, is not affected by the bypass path.

In some embodiments the system further includes a control unit which controls the state of the first, second and further switchable elements. In particular, the control unit may be configured to close one of the first and second switchable elements and the further switchable element, and, after a defined time period, close the other of the first and second switchable elements. Accordingly, initially, either the first or the second switchable element (such as the switchable element for the low side voltage rail) and the further switchable element for the bypass path are switched on, i.e., closed. Any inrush current is limited and damped by the bypass resistor as discussed. Subsequently, when the different voltages have aligned, the other of the switchable elements (such as the switchable element for the high side voltage rail) is switched on/closed. At this point, the further switchable element may be opened again as it is not of use anymore.

In some embodiments the control unit is configured to: close one of the first and second switchable elements; subsequently, after a first defined time period, close the further switchable element; and subsequently, after a second defined time period, close the other of the first and second switchable elements.

Accordingly, in such embodiments there is a sequence of three steps, wherein, first, one of the first and second switchable elements is closed, subsequently the switchable element of the bypass path is closed, and finally the other of the first and second switchable elements is closed. Again, at this point, the further switchable element of the bypass path may be opened again.

It may be provided for that all DC power sources, all switchable elements and all load devices are centrally controlled by the control unit. Such central control unit oversees controlling and commanding of each of DC power sources and the load devices, thereby being able to connect particular DC power sources in case need arises (such as when one of the load devices fails). Such central control unit may also consider other parameters such as a mission profile and load demands.

Generally, it may be provided that each DC power source powers at least two of the load devices through a respective power converter such as an inverter, wherein each power converter drives one of the load devices.

In some embodiments the switchable elements are contactors. This is associated with the advantage that a full galvanic isolation of the respective positive and negative lanes can be achieved. However, in other embodiments, the switchable element may, e.g., be a relay. A contactor within the meaning of the present disclosure is any electromechanical control device that is used to make or break an electrical connection. A contactor is controlled by a circuit which has a much lower power level than the switched circuit. A contactor knows two switching positions and is typically monostable, wherein bi-stable contactors may be provided as well in embodiments of the present system.

Typically, a contactor is activated by electromagnets. For example, when a control current flows through a solenoid coil of an electromechanical contactor, the magnetic field pulls the mechanical contacts into the active state. Without current, a spring restores the idle state and all contacts return to their initial position. The connections for control current for the solenoid coil as well as the contacts for auxiliary circuits (if any) and currents to be switched are isolated from each other in the contactor. There is no conductive connection between control and switching contacts. Such contactors are well known to the skilled person.

In some embodiments the DC connection network is configured such that one considered DC power source is connectable to one other DC power source only, such that there is at least one pair of associated DC power sources, wherein two DC power sources which are connectable are connectable through the switchable elements.

According to such embodiments, there are provided pairs of associated DC power sources which may be connected through a switchable element. It is thus provided that a particular DC power source can be electrically connected to a particular associated DC power source only, and not to any of the other DC power sources of the system. Such bidirectional association is associated with the advantage that a central control is simplified as two DC power sources have to be considered only when readjusting DC power source connections.

In some embodiments the DC power source comprises an electric battery. However, the present system is not limited to such embodiments. For example, there may be provided fuel cells as DC power sources, a mixture of batteries and fuel cells, or a turbo generator/active rectifier.

In some embodiments the load device comprises an electric motor. However, the present system is not limited to such embodiments. For example, other load devices such as pumps may be provided for.

One application of the present system lies in electric Vertical Take Off and Landing aircrafts (e-VTOLs). During take-off and landing the propulsion system of e-VTOLs is at its limit. E-VTOLs use several independent engines that provide for redundancy. A DC Electric Power Distribution Unit (which is a control unit) distributes and connects the energy sources to the loads. One of the functions of the distribution unit is to connect multiple energy sources, e.g., in case of an engine failure.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

The invention will be explained in more detail on the basis of exemplary embodiments with reference to the accompanying drawings in which:
**Figure 1** shows an embodiment of multilane power distribution system comprising multiple batteries and multiple electronic propulsion units, wherein two associated lanes and batteries may be electrically connected through contactors;
**Figure 2** is an embodiment of a sub-distribution system of the distribution system of Figure 1, wherein the sub-distribution system comprises two batteries connected through a power line that has a high side voltage rail and a low side voltage rail, wherein the subsystem further comprises a contactor in the high side voltage rail, a contactor in the low side voltage rail and a bypass path that comprises an inductor and a further contactor;
**Figure 3** shows an embodiment of a control system for controlling a multilane power distribution system such as the system of Figure 1;
**Figure 4** is a flowchart of a method for controlling the contactors of Figure 2, wherein the contactors are switched on in a specified sequence;
**Figure 5** is a diagram showing the inrush current over a time period in which the contactors of Figure 2 are switched on in a sequence;
**Figure 6** is a diagram showing the voltage difference over the contactor in the high side voltage rail over a time period in which the contactors of Figure 2 are switched on in a sequence;
**Figure 7** is a further embodiment of a sub-distribution system of the distribution system of Figure 1, wherein the sub-distribution system comprises two batteries connected through a power line that has a high side voltage rail and a low side voltage rail, wherein the subsystem further comprises a contactor in the high side voltage rail, a contactor in the low side voltage rail and a bypass path that comprises an ohmic resistor and a further contactor; and
**Figure** 8 is an example of a sub-distribution system not in accordance with the present invention.

### Detailed description

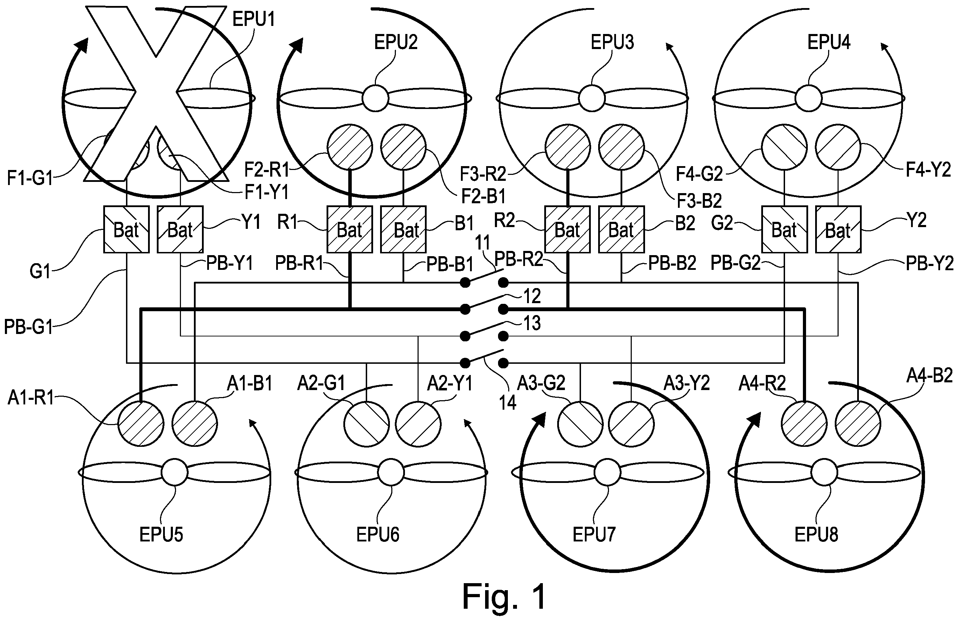

With increased penetration of electrical systems and the progression towards full electric and hybrid propulsion systems, the use of DC multilane power distribution systems has gained increased use. Figure 1 shows schematically an example embodiment of a DC multilane power distribution system, wherein the system comprises a plurality of power sources G1, G2, Y1, Y2, B1, B2, R1, R2 and a plurality of load devices EPU 1 to EPU 8 which are connected through a DC distribution system. Such system may be used in hybrid propulsion system applications.

The power sources G1, G2, Y1, Y2, B1, B2, R1, R2 may be or comprise batteries and are, in the following, referred to as batteries, without limiting the power sources to batteries. For example, in aerospace applications, the power sources may alternatively be fuel cells or a rectifier extracting power from a turbo generator. The load devices EPU 1 to EPU 8 may be electronic propulsion units (EPUs) and are, in the following, referred to as EPUs, without limiting the load devices two EPUs.

The architecture of the multilane power distribution system of Figure 1 implements redundancy and power sharing aspects as follows:
First, each battery G1, G2, Y1, Y2, B1, B2, R1, R2 powers two EPUs. For example, battery G1 powers EPU 1 and EPU 6. In another example, battery G2 powers EPU 4 and EPU 7.

Second, each of the EPUs EPU 1 to EPU 8 is powered by two of the batteries G1, G2, Y1, Y2, B1, B2, R1, R2. For example, EPU 1 is powered by battery G1 and by battery Y1. EPU 2 is powered by battery R1 and battery B1. EPU 3 is powered by battery R2 and by battery B2, etc.

Third, two of the batteries are assigned to each other in the sense that a particular of the batteries can be electrically connected to another one of the batteries, wherein each battery can be connected to one associated other battery only. For example, batteries G1, G2 are assigned to each other. They can be connected through a contactor 14 which connects the respective power buses (also referred to as lanes) PB-G1, PB-G2.

In a similar manner, batteries Y1, Y2 are assigned to each other. They can be connected through a contactor 13 which connects the respective power busses PB-Y1, PB-Y2. Further, batteries R1, R2 are assigned to each other. They can be connected through a contactor 12 which connects the respective power buses PB-R1, PB-R2. Also, batteries B1, B2 are assigned to each other. They can be connected through a contactor 11 which connects the respective power buses PB-B1, PB-B2.

The power busses PB-G1/2, PB-Y1/2, PB-B1/2, PB-R1/2 form a DC distribution network, wherein two associated batteries and their corresponding lanes/power buses (such as batteries G1, G2 and power buses PB-G1, PB-G2) form a sub-distribution system within the overall DC distribution system.

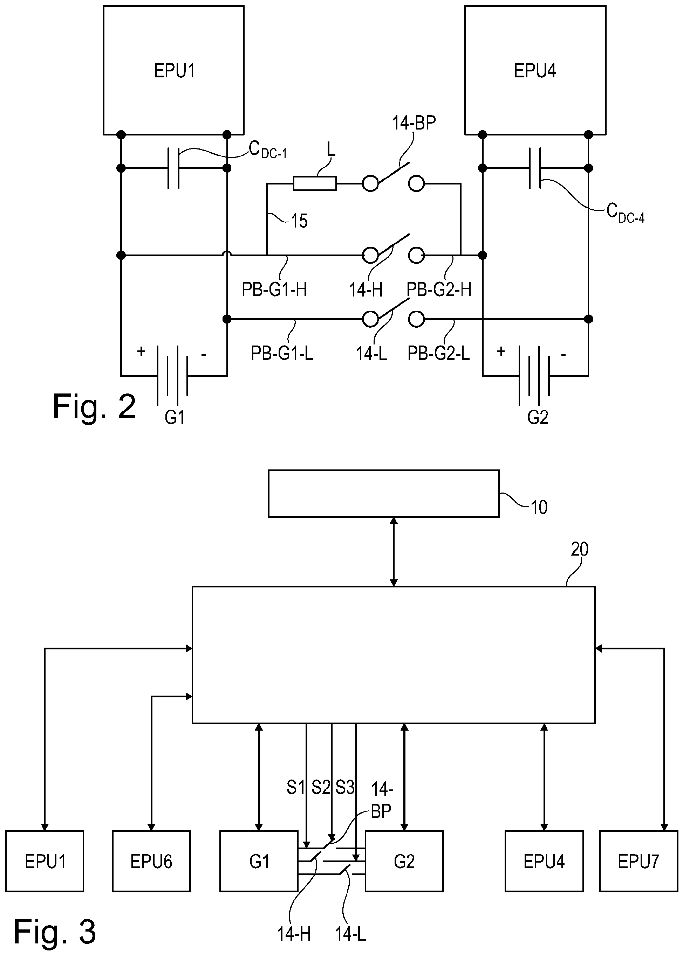

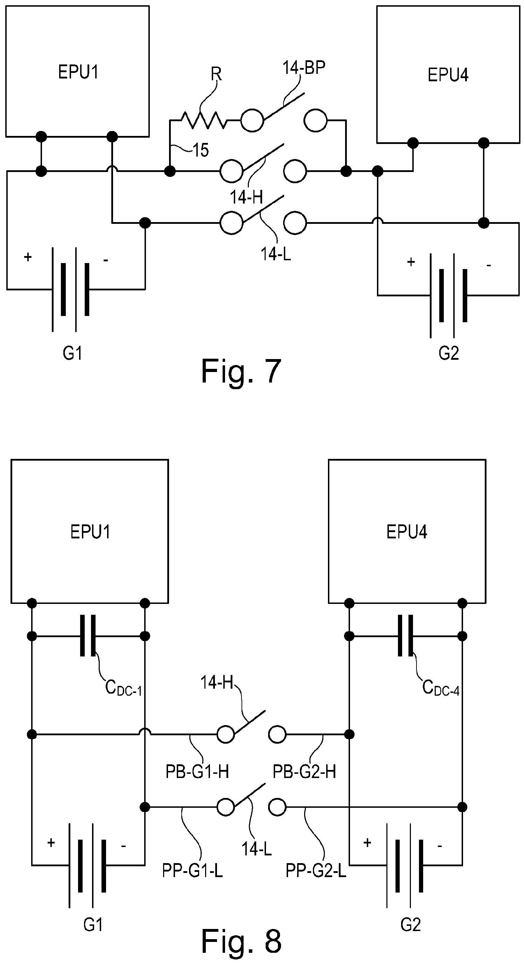

It is pointed out that each power bus comprises a high side voltage rail connected to a positive batterie voltage and a low side voltage rail connected to a negative batterie voltage, as will be seen, e.g., in Figures 2 and 8. It is further pointed out that the contactors 11-14 each comprise a contactor for the high side voltage rail and a contactor for the low side voltage rail, as will also be seen, e.g., in Figures 2 and 8. When two batteries are connected, the high side voltage rails are connected and the low side voltage rails are connected (parallel connection).

It is further pointed out that the network of Figure 1 represents an example network only. Other network configurations may be implemented as well. For example, in other embodiments, three or more of the batteries are assigned to each other in the sense that they may be electrically connected to each other. In another example, the architecture may include a ring architecture, wherein two or more than two batteries are connected at given time.

Each of the EPUs EPU 1 to EPU 8 comprises two electrical motors. For example, EPU 1 comprises electric motor F1-G1 which is driven by battery G1 through a power converter/inverter (not shown). EPU 1 further comprises electric motor F1-Y1 which is driven by battery Y1 through another power converter/inverter (not shown). For example, the power converters each provide for a three phase alternating current which drives the respective electric motors F1-G1 and F1-Y1. In this respect, it is pointed out that the electric motors such as electric motors F1-G1 and F1-Y1 may be two physically different machines connected to the same shaft, or maybe two sets of windings wound in the same machine, each fed by a different power converter.

In a similar manner, each of the other EPUs EPU 2-8 comprise two electrical motors F2-R1, F2-B1, F3-R2, F3-B2, F4-G2, F4-Y2, A1-R1, A1-B1, A2-G1, A1-Y1, A3-G2, A3-Y2, A4-R2, A4-B2, and corresponding power converters as well.

In the depicted embodiment, the EPUs may include propellers, wherein some of the propellers turn in one direction and the same number of propellers turn in the other direction, such as is used in e-VTOLs. However, this represents an embodiment only.

During certain mission profiles, the lanes are kept independent whereas under certain conditions it is preferable that lanes are connected to allow sharing of power from the batteries. For example, in Figure 1 it is schematically illustrated as an example that EPU 1 fails. In such case, it is sensible to diverge the energies of the batteries G1, Y1 to some of other EPUs by closing contactors 13 and 14.

Accordingly, it is beneficial under certain conditions, for example during a failure condition, to electrically connect batteries which are associated and together form a sub-distribution system, such as electrically connecting batteries G1, G2 through contactor 14 or batteries Y1, Y2 through contactor 13. However, sharing energy stored in batteries is not straightforward, and different batteries will be discharged differently and will, therefore, have different voltages at the time they are connected. When batteries are connected that have different voltages, this would result in unwanted inrush current and/or current flowing among the batteries.

Further, as will be discussed with respect to Figures 2 and 8, there may be load capacities present or associated with the loads of the batteries, wherein such load capacities may also cause an inrush current.

**Figure 8** depicts a sub-distribution system of the distribution system of Figure 1 which not in accordance with the present invention. The sub-distribution system comprises batteries G1, G2 and EPUs EPU 1 and EPU 4 as depicted in Figure 1. A power bus PB-G1 connected to battery G1 comprises a high side voltage rail PB-G1-H and a low side voltage rail PB-G1-L. In a similar manner, a power bus PB-G2 connected to battery G2 comprises a high side voltage rail PB-G2-H and a low side voltage rail PB-G2-L. In between the voltage rails are provided a contactor 14-H connecting the high side voltage rails PB-G1-H, PB-G2-H and a contactor 14-L connecting the low side voltage rails PB-G1-L, PB-G2-L. The contactors may also be referred to as bus-tie contactors.

It is pointed out that the batteries G1, G2 contact through the voltage rails also the EPUs EPU 1 and EPU 4, respectively. Figure 8 further shows filtering capacities C_{DC-1}, C_{DC-4} between the respective high side voltage rails and low side voltage rails. The voltage rails with mounted filtering capacitors C_{DC} and connected to the battery G1, G2 are often termed as DC link and the filtering capacitors C_{DC} are termed as DC link capacitors which are meant to filter any AC noise present in the DC line mainly when operating at higher voltage levels. The filtering capacitors C_{DC} and, possibly, further capacitors within or associated with the load, provide for a capacitive load which, when the contactors 14-H, 14-L are closed provide for a high inrush current. In addition, an inrush current may be produced by a different voltage the batteries G1, G2 present before the contactors 14-H, 14-L are closed.

**Figure 2** a sub-distribution system of the distribution system of Figure 1 which is in accordance with the present invention. The sub-distribution system comprises the same components as the sub-distribution system of Figure 2 and, in addition, a bypass path 15 that bypasses contactor 14-H. The bypass path 15 comprises an inductor L and a further contactor 14-BP.

A specific sequence in closing the different contactors 14-L, 14-H, 14-BP is implemented under the control of a control unit, as is discussed with respect to **Figure 3.** Figure 3 shows a system design in which a control unit 20 controls operation of the batteries, the EPUs and the contactors. In Figure 3, for simplicity, only two of the batteries G1, G2, the contactors 14-H, 14-L and 14-BP connecting these batteries G1, G2, and the EPUs which are driven by these batteries (EPUs 1, 6, 4 and 7 in accordance with Figure 1) are shown, wherein all the batteries, EPUs, corresponding converters and electric motors and contactors communicate with the control unit 20. The control unit 20 may further communicate with an aircraft controller 10.

More particularly, in Figure 3, the batteries G1, G2 provide information to the control unit 20 such as voltage, current and temperature. Battery G1 powers EPU 1 and EPU 6. In a similar manner, battery G2 powers EPU 4 and EPU 7. The control unit 20 also controls operation of the EPUs and the amount of energy provided to the EPUs. The control unit 20 further controls whether two batteries such as batteries G1, G2 are to be connected. To this end, the control unit 20 provides control signals S1, S2, S3, wherein the control signals may be in the form of a current that, if switched on, closes the respective contactors 14-H, 14-L and 14-BP. Accordingly, the state of the contactors 14-H, 14-L and 14-BP (switched on (closed) and switched off (opened)) is controlled by control unit 20.

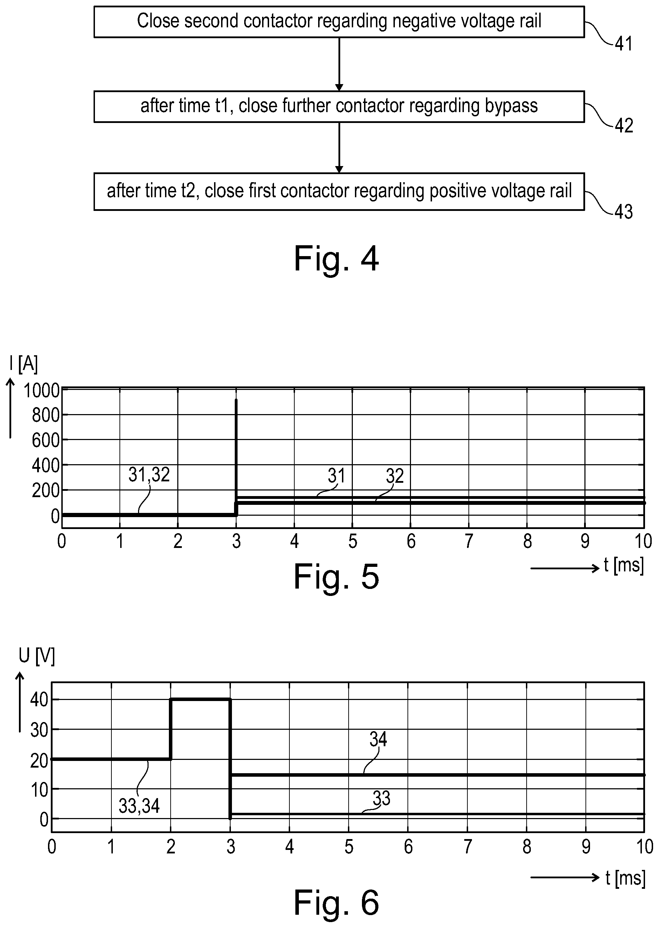

Control unit 20 provides for a specific sequence of closing the contactors in case two batteries such as batteries G1, G2 are to be electrically connected. Such sequence is depicted in **Figure 4****.** According to Figure 4, in step 41, first the second contactor 14-L regarding the negative voltage rail is closed through control signal S1. Subsequently, after a time t1 the further contactor 14-BP of the bypass path is closed through control signal S2, step 42. The time t1 may be, e.g., in the range of one or several milliseconds. Subsequently, after a time t2, the first contactor 14-H regarding the positive voltage rail is closed through control signal S3. The time t2 is typically longer than the time t1. When the first contactor 14-H is closed, the further contactor 14-BP in the bypass path 15 may be opened again.

Figures 5 and 6 show the effect of such switching of the contactors 14-H, 14-L and 14-BP on the current and on the voltage, wherein the layout of Figure 2 with the bypass path 15 is compared with the layout of Figure 8 without a bypass path, wherein the same voltage difference was applied to the subsystems with battery G1 and battery G2.

**Figure 5** shows the balancing current I (in Ampere) dependent on time t that rushes through contactor 14 when the contactor 14 is closed. At 2 ms time, the contactor 14-L for the negative voltage rail is closed, which does not have any effect on the current in both layouts. At 3 ms time, the contactor 14-H is closed for the positive voltage in the layout of Figure 8. The corresponding current graph 31 produces a spike which indicates a high inrush current when the contactor is closed. Further, at 3 ms time, the contactor 14-BP in the bypass path 15 is closed in the layout of Figure 2. The corresponding current graph 32 does not show a spike. This is caused by the inductor L in the bypass path 15 damping and limiting the inrush current due to the voltage induced in the inductor L which counteracts the current flow through the inductor.

**Figure 6** shows the voltage difference V (in Volt) over the contactor 14-H connecting the high side voltage rails PB-G1-H and PB-G2-H (see Figures 2 and 8) dependent on time t. At 2 ms time, the contactor 14-L for the negative voltage rail is closed, which leads to an increase of the voltage difference in both layouts. At 3 ms time, the contactor 14-H is closed for the positive voltage in the layout of Figure 8. The corresponding voltage graph 33 drops to zero as the two lanes are now connected. Further, at 3 ms time, the contactor 14-BP in the bypass path 15 is closed in the layout of Figure 2. The corresponding voltage graph 34 first drops to zero and then rises again due to the voltage induced by the inductor L.

After some time t2, when the voltage difference is zero or below a defined threshold, the first contactor 14-H is closed and the contactor 14-BP in the bypass path 15 is opened in the layout of Figure 2, thereby arriving at normal operation after the two batteries G1, G2 have been connected.

**Figure 7** depicts an embodiment which in principle is identical to the embodiment of Figure 2, except that the bypass path 15 comprises an ohmic resistor R instead of an inductor L. Such ohmic resistor R also limits the inrush current. In further embodiments, the bypass path 15 may comprise both an inductor and an ohmic resistor. The same sequence of closing the contactors 14-L, 14-H, 14-BP may be implemented as in Figure 2.

Further, in Figure 7, the capacitive loads C_{DC} are not depicted (but still present).

In an alternative embodiment, in the layout of Figures 2 and 7 the second contactor 14-L and the further contactor 14-BP are closed at the same time (and not in sequence), wherein the first contactor 14-H is closed a specified time after the other contactors 14-L, 14-BP.

It should be understood that the above description is intended for illustrative purposes only, and is not intended to limit the scope of the present disclosure in any way. Also, those skilled in the art will appreciate that other aspects of the disclosure can be obtained from a study of the drawings, the disclosure and the appended claims. All methods described herein can be performed in any suitable order unless otherwise indicated herein or otherwise clearly contradicted by context. Various features of the various embodiments disclosed herein can be combined in different combinations to create new embodiments within the scope of the present disclosure. In particular, the disclosure extends to and includes all combinations and sub-combinations of one or more features described herein. Any ranges given herein include any and all specific values within the range and any and all sub-ranges within the given range.

## Claims

1. A multilane power distribution system comprising:
a plurality of DC power sources (G1, G2, Y1, Y2, B1, B2, R1, R2);
a plurality of load devices (EPU 1-8), wherein: each DC power source (G1, G2, Y1, Y2, B1, B2, R1, R2) powers at least two of the load devices (EPU 1-8), and each of the load devices (EPU 1-8) is powered by at least two of the DC power sources (G1, G2, Y1, Y2, B1, B2, R1, R2); and
a DC connection network, the DC connection network comprising power buses (PB-G1/2, PB-Y1/2, PB-B1/2, PB-R1/2) for connecting the DC power sources (G1, G2, Y1, Y2, B1, B2, R1, R2) and the load devices (EPU 1-8), the power buses having a high side voltage rail (PB-G1-H, PB-G2-H) for the positive voltage and a low side voltage rail (PB-G1-L, PB-G2-L) for the negative voltage;
wherein at least two of the power buses (G1, G2, Y1, Y2, B1, B2, R1, R2) are connectable by switchable elements (11-14, 14-H, 14-L), namely, a first switchable element (14-H) for the positive voltage rails (PB-G1-H, PB-G2-H) and a second switchable element (14-L) for the negative voltage rails (PB-G1-L, PB-G2-L), the switchable elements (14-H, 14-L) when switched on electrically connecting the terminals of two of the DC power sources (G1, G2) connected by the respective power buses (PB-G1, PB-G2); and
wherein a bypass path (15) bypassing one of the switchable elements (14-H), the bypass path (15) comprising a bypass resistor (I, R) and a further switchable element (14-BP).

2. The multilane power distribution system of claim 1, wherein the bypass resistor is or comprises an inductor (I) having an inductive resistance.

3. The multilane power distribution system of claim 1, wherein the bypass resistor is or comprises an ohmic resistor (R).

4. The multilane power distribution system of any preceding claim, wherein the bypass path (15) bypasses the first switchable element (14-H).

5. The multilane power distribution system of any preceding claim, wherein a control unit (20) controlling the state of the first, second and further switchable elements (14-H, 14-L, 14-BP).

6. The multilane power distribution system of claim 5, wherein the control unit (20) is configured to:
close (41, 42) one of the first and second switchable elements (14-L) and the further switchable element (14-BP), and, after a defined time period;
close (43) the other of the first and second switchable elements (14-H).

7. The multilane power distribution system of claim 5, wherein the control unit is configured to:
close (41) one of the first and second switchable elements (14-L);
subsequently, after a first defined time period, close (42) the further switchable element (14-BP); and
subsequently, after a second defined time period, close (43) the other of the first and second switchable elements (14-H).

8. The multilane power distribution system of any one of claims 5 to 7, wherein all DC power sources (G1, G2, Y1, Y2, B1, B2, R1, R2), all switchable elements (11-14, 14-H, 14-L, 14-BP) and all load devices (EPU 1-8) are centrally controlled by the control unit (20).

9. The multilane power distribution system of any preceding claim, wherein each DC power source (G1, G2, Y1, Y2, B1, B2, R1, R2) powers at least two of the load devices (EPU 1-8) through a respective power converter (F1-G1, F1-Y1, F2-R1, F2-B1, F3-R2, F3-B2, F4-G2, F4-Y2, A1-R1, A1-B1, A2-G1, A2-Y1, A3-G2, A3-Y2, A4-R2, A4-B2), wherein each power converter drives one of the load devices (EPU 1-8).

10. The multilane power distribution system of any preceding claim, wherein the switchable elements (14-H, 14-L, 14-BP) are contactors.

11. The multilane power distribution system of any preceding claim, wherein the DC connection network is configured such that one considered DC power source (G1, Y1, B1, R1) is connectable to one other DC power source (G2, Y2, B2, R2) only, such that there is at least one pair of associated DC power sources (G1, G2, Y1, Y2, B1, B2, R1, R2), wherein two DC power sources (Y1, Y2, G1, G2, B1, B2, R1, R2) which are connectable are connectable through the switchable elements (11-14, 14-H, 14-L).

12. The multilane power distribution system of any preceding claim, wherein the DC power source (G1, G2, Y1, Y2, B1, B2, R1, R2) comprises an electric battery and/or the load device (EPU 1-8) comprises an electric motor.
